# EUROPEAN PATENT SPECIFICATION

(11) **EP 2 354 702 B1**
(45) Date of publication and mention of the grant of the patent: **01.05.2013**
(21) Application number: 11151075.6
(22) Date of filing: 17.01.2011
(51) Int. Cl.: F28D 9/00, F24H 1/32, F24H 1/28, F24H 1/46, F24H 8/00, F24H 9/18

(54) **Modular thermic assembly with modulating burners for condensation boiler.**
Modulare Wärmeanordnung mit modulierenden Brennern für Brennwertkessel
Ensemble thermique modulaire doté de brûleurs de modulation pour chaudière à condensation.

(30) Priority: 21.01.2010 IT MI20100073
(43) Date of publication of application: 10.08.2011
(73) Proprietor: Rigamonti, Angelo, 20060 Pessano Con Bornago (MI) (IT)
(72) Inventor: Rigamonti, Angelo, 20060 Pessano Con Bornago (MI) (IT)
(74) Representative: Mittler, Enrico

(56) References cited:
- EP-A1- 0 843 135
- EP-A1- 1 398 579
- EP-A2- 0 271 434
- DE-A1- 2 721 894
- DE-A1- 4 414 776
- GB-A- 639 522
- GB-A- 189 730 343
- JP-A- 57 134 645

## Description

The present invention relates to a modular thermic assembly for condensation boiler.

A condensation boiler is generally an apparatus in which a fluid defined "useful" (water or air) receives heat from another fluid having higher temperature, called "exchange fluid", consisting of combustion flue gases and hot air, which is generated by a burner within a combustion chamber and crosses a heat exchanger arranged within the case or casing of the boiler. At the end of the heat exchange, the exchange fluid, exhausted and no longer capable of permitting the heat exchange, is expelled through an expulsion chamber with exhaust chimney.

An example of boiler is described in WO 2008/138803 and an example of heat exchanger is described in WO 2007/093231.

The tendency is known of making boilers having several independent thermic modules, which through the activation or set-aside of one or more modules allows the thermal power of the boiler to be varied depending on the needs, in particular according to the external temperature which is variable from one period to the next.

Currently the individual modules are boilers separate from each other, which require their own control units and their own external connections for transferring the useful fluid to the system used.

This results in rather high costs of the whole, formed by the different boiler modules and by the related control and connection units.

GB-A-639522 discloses a thermic assembly with a plurality of heat exchangers according to the preamble of claim 1.

It is the object of the present invention to make a modular thermic assembly for condensation boiler which forms a single boiler block having variable power equipped with a single control unit and with a single connection to the system used.

In accordance with the present invention, such an object has been achieved by means of a modular thermic assembly as defined in claim1.

The modular thermic assembly according to the invention substantially consists of a boiler whose power depends on the number of heat exchangers with respective burners which are arranged within the common casing.

On the other hand, the power of the boiler thus formed may be varied according to the number of burners operating, each inserted in a respective combustion chamber of a respective heat exchanger. If all the burners are operating, the boiler works at the maximum power. By turning off one or more burners, the power of the boiler decreases correspondingly, according to need, up to a minimum value which is only obtained when one burner is left to operate. The different combinations allow precise energy uses depending on the requirements while keeping the possibility of providing the maximum project power.

Some embodiments are illustrated by way of non-limiting example in the accompanying drawings in which:
figure 1 shows a perspective view of a vertical modular thermic assembly with two heat exchangers in overlapped position;
figure 2 is the same thermic assembly in frontal view;
figure 3 shows a vertical cross-section of said thermic assembly according to line III-III in figure 2;
figure 4 shows a vertical cross-section of said thermic assembly according to line IV-IV in figure 3;
figure 5 shows a horizontal cross-section of said thermic assembly according to line V-V in figure 2;
figure 6 shows a perspective view of a horizontal modular thermic assembly with three heat exchangers in side-by-side position;
figure 7 is the same thermic assembly in frontal view;
figure 8 shows a horizontal cross-section of said thermic assembly according to line VIII-VIII in figure 7;
figure 9 shows a vertical cross-section of said thermic assembly according to line IX-IX in figure 8;
figure 10 shows a horizontal cross-section of said thermic assembly according to line V-V in figure 7;
figure 11 shows the perspective view of a further modular thermic assembly corresponding to the combination of two assemblies like the one in figure 1 or three assemblies like the one in figure 6;
figure 12 shows a vertical cross-section, similar to the ones in figures 4 and 9, of the aforesaid further thermic assembly;
figure 13 shows a vertical cross-section of the same modular assembly according to line XIII-XIII in figure 12;
figure 14 shows a horizontal cross-section of the same modular assembly according to line XIV-XIV in figure 12.

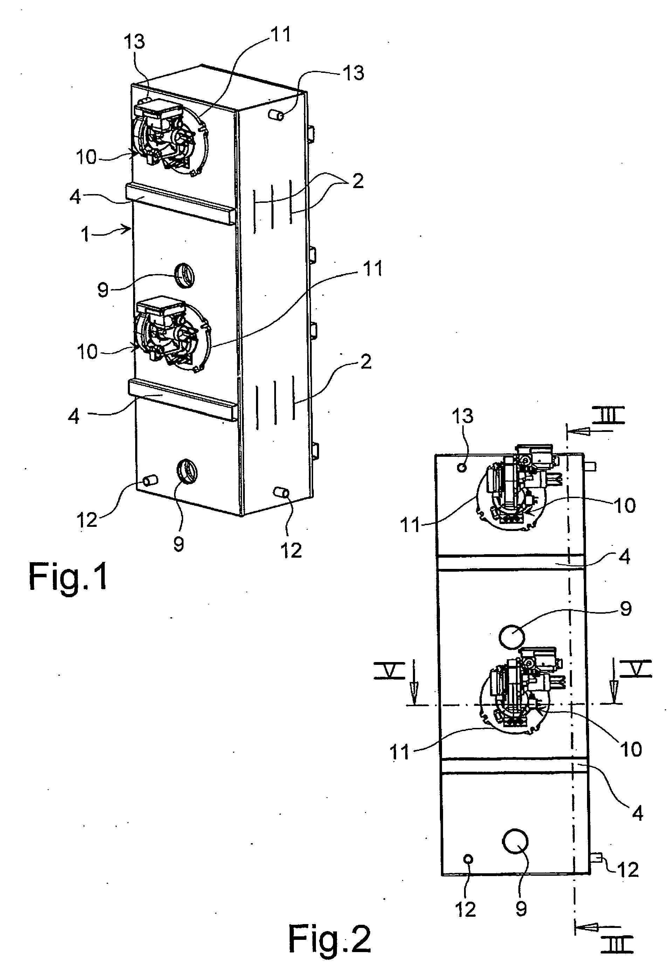

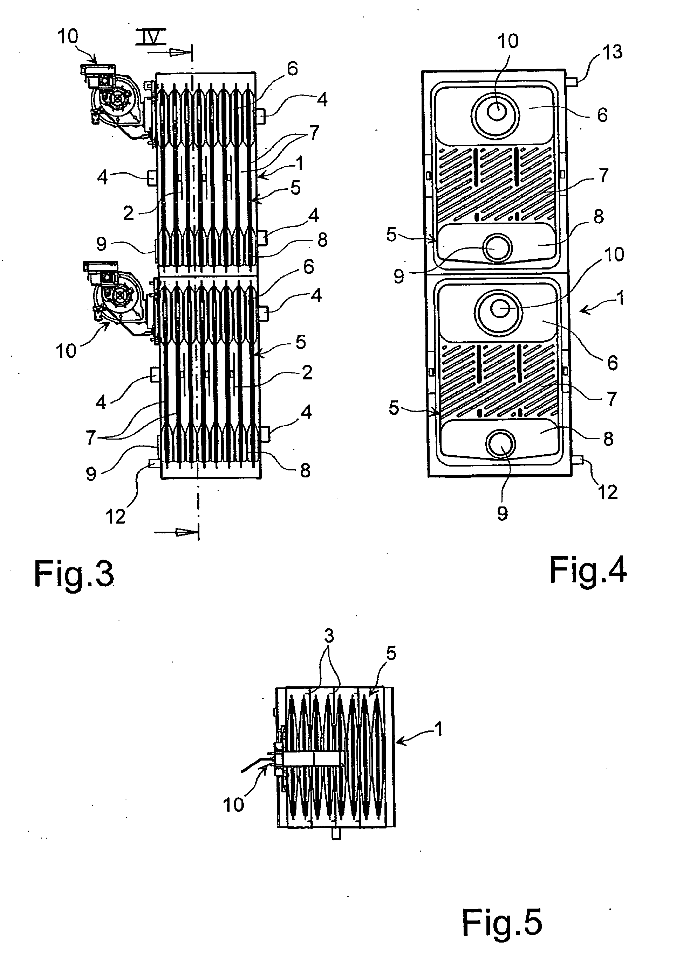

The modular thermic assembly in figures 1 - 5 comprises an external casing 1 reinforced with horizontal plate-like tie rods 2, vertical plate-like tie rods 3 and front and rear outer ribwork 4. The conformation of the casing 1 is illustratively of the type shown in WO 2008/138803.

Accommodated in the internal space of the casing 1 in reciprocally overlapping position are two heat exchangers 5, illustratively of the type described in WO 2007/093231. Each heat exchanger 5 comprises a combustion chamber 6 for the formation of a heat exchange fluid (air and flue gases), slotted walls 7 for the passage of the heat exchange fluid and an expulsion chamber 8 for the exiting of the heat exchange fluid through an exhaust chimney 9. A respective modulating burner 10 fastened to the frontal wall of the casing 1 at a mouth 11 communicating with said combustion chamber 6 is associated with the combustion chamber 6 of each heat exchanger 5. The heat exchangers 5 are lapped by a useful fluid (usually water or air) to be heated, which is introduced by means of small inlet mouths 12 and is exited through small outlet mouths 13.

The burners 10 keep the heat exchange fluid at a higher temperature than the one of the useful fluid, which thus, in contact with the heat exchangers 5, acquires heat which is then transferred to the system used.

The thermic assembly in figures 1 - 5 consists of as a whole the equivalent of two boilers having dividable operation. If both the modulating burners 10 are turned on at the maximum power, the boiler disburses the maximum calorific power allowed by the two heat exchangers 5. Instead, if one thereof is turned off, the boiler operates at halved speed. Furthermore, if the burner which remained on is operated at 30% of the maxim power thereof, the boiler operates at 15% of the maximum potential thereof. The user may select the most suitable potential (within the maximum boiler potential) based on needs.

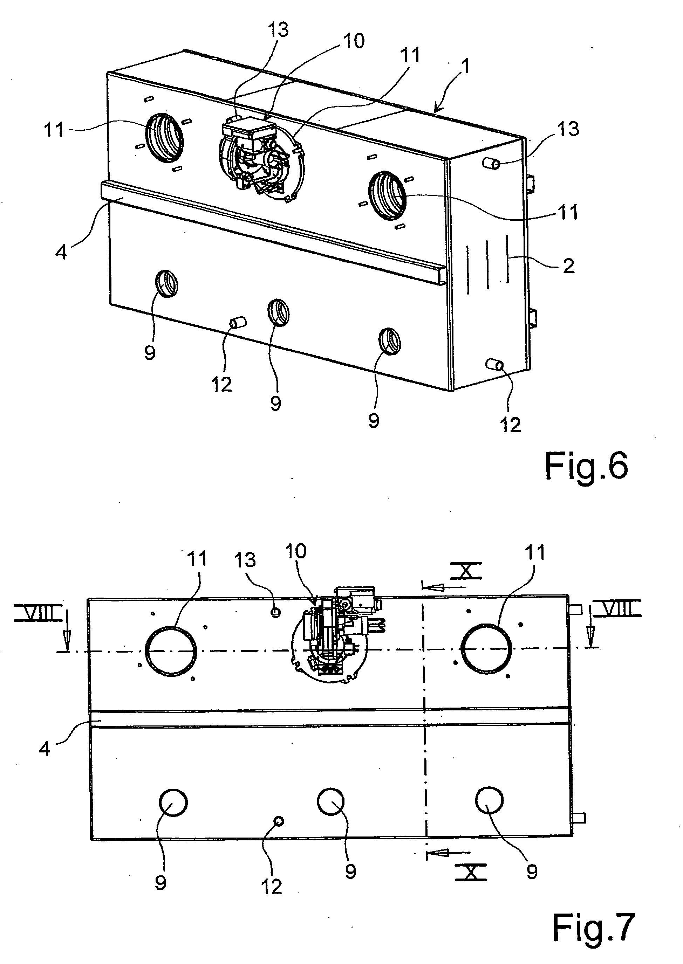

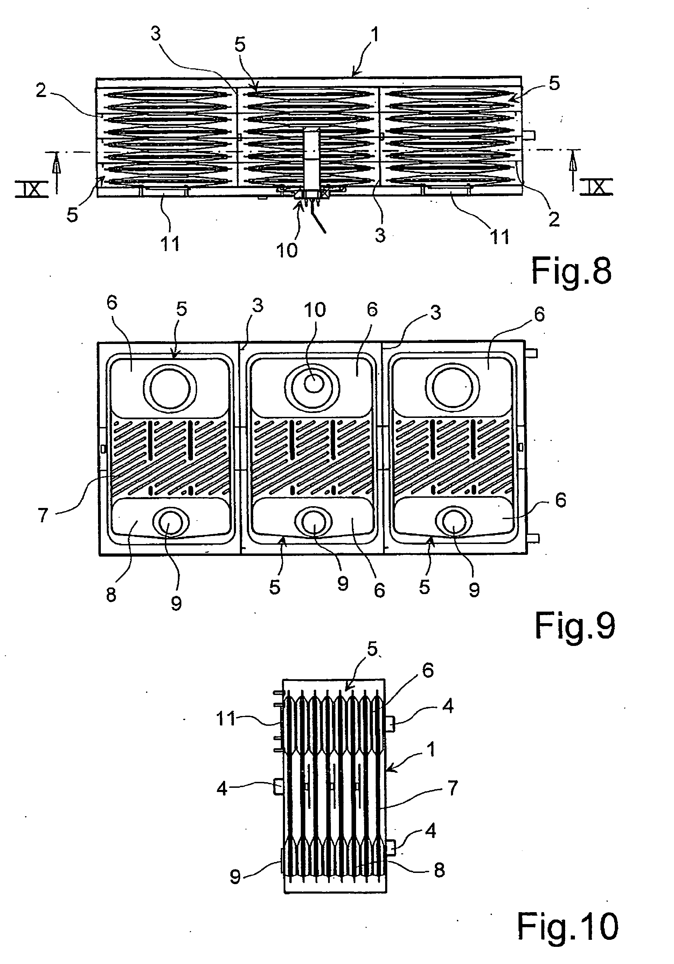

The thermic assembly in the figures 6 - 10 is in essence similar to the one in figures 1 - 5. The only difference is depicted by the arrangement of the three heat exchangers 5 in side-by-side instead of overlapped position. Once again the thermic assembly is equivalent to three boilers which may operate at whole or halved power depending on whether or not all the burners are on 10 or only one thereof is on.

In both cases, the outer casing is single as are single the connections to the system used, and the control unit may be single, but the power disbursed may be varied according to the number of burners and the modulation curve thereof.

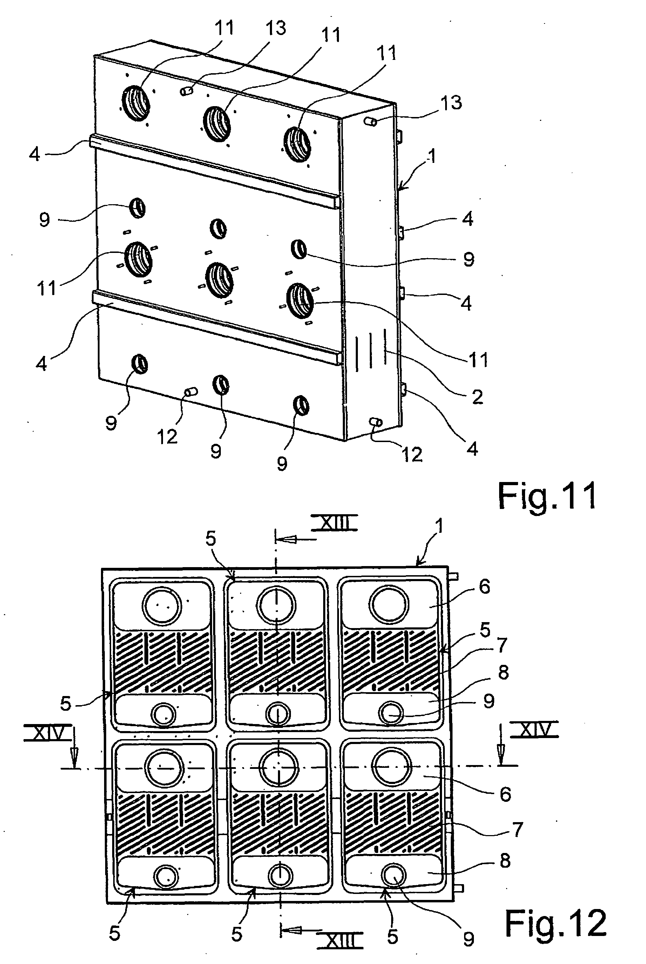

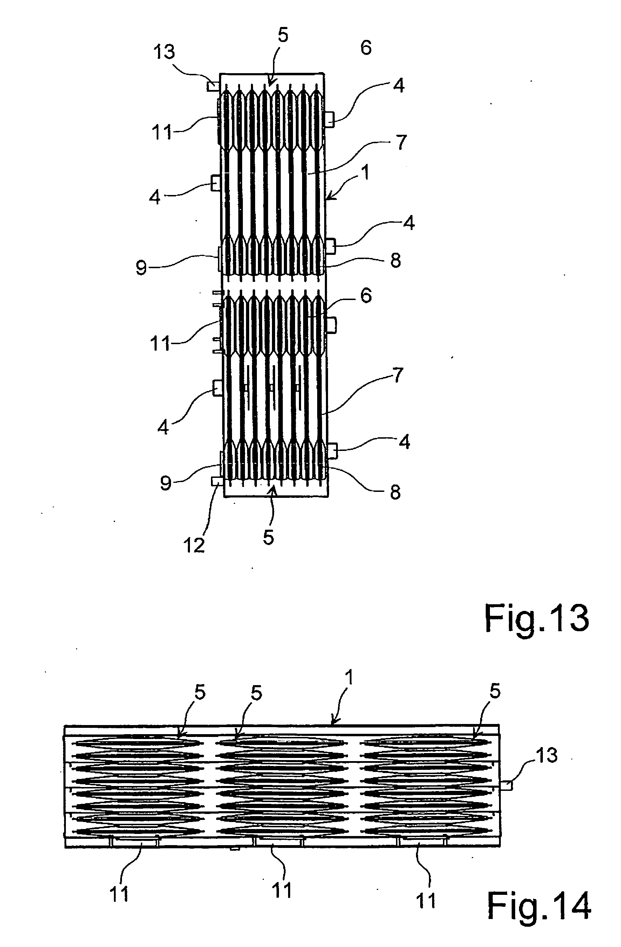

Figures 11 - 14 show a further example of modular thermic assembly, which is equivalent to three of the vertical thermic assemblies like the one in figures 1 - 5, side-by-side, or to two horizontal thermic assemblies like the one in figures 6 - 10, one overlapping the other. Again the casing is single, but there are six heat exchangers 5, each with its own independent burner 10. The thermic assembly in figures 11 and 12 is therefore equivalent to six boilers, which may be operated at whole power or at variably reduced power according to the number of burners on and to the modulation curve thereof.

## Claims

1. Modular thermic assembly for condensation boiler, comprising a single casing (1) with an internal space for the circulation of a useful fluid to be heated, a plurality of heat exchangers (5) housed in said internal space for the formation and the circulation of a heat exchange fluid and a modulating burner (10) with independent operation associated to each heat exchanger (5), wherein each heat exchanger (5) comprises a combustion chamber (6) to which said respective modulating burner (10) is associated for the generation of the heat exchange fluid, **characterised in that** each heat exchanger (5) further comprises slotted walls (7) for the passage of the heat exchange fluid and an expulsion chamber (8) for the exiting of the heat exchange fluid through an exhaust chimney (9).

2. Thermic assembly according to claim 1, **characterized in that** said modulating burner (10) is fastened to a wall of the casing (1) at a mouth (11) communicating with said combustion chamber (6).

3. Thermic assembly according to claim 1, **characterized in that** said heat exchangers (5) are arranged in overlapped positions.

4. Thermic assembly according to claim 1, **characterized in that** said heat exchangers (5) are arranged in side-by-side positions.

5. Thermic assembly according to claim 1, **characterized in that** said heat exchangers (5) are arranged in overlapped and side-by-side positions.

## Patentansprüche

1. Modulare Wärmeanordnung für Brennwertkessel,
aufweisend ein einziges Gehäuse (1) mit einem Innenraum für die Zirkulation eines zu erwärmenden Nutzfluids, eine Mehrzahl von Wärmetauschern (5), die in dem Innenraum zur Bildung und Zirkulation eines Wärmeaustauschfluids untergebracht sind, und einen jedem Wärmetauscher (5) zugeordneten, modulierenden Brenner (10) mit unabhängigem Betrieb, wobei jeder Wärmetauscher (5) eine Brennkammer (6) aufweist, der der jeweilige modulierende Brenner (10) zugeordnet ist, um das Wärmeaustauschfluid zu erzeugen,
**dadurch gekennzeichnet, dass** jeder Wärmetauscher (5) weiterhin geschlitzte Wände (7) für den Durchtritt des Wärmeaustauschfluids und eine Ausstoßkammer (8) für den Austritt des Wärmeaustauschfluids durch einen Abluftkamin (9) aufweist.

2. Wärmeanordnung nach Anspruch 1,
**dadurch gekennzeichnet, dass** der modulierende Brenner (10) an einer Wand des Gehäuses (1) an einer Mündung (11) befestigt ist, die mit der Brennkammer (6) in Verbindung steht.

3. Wärmeanordnung nach Anspruch 1,
**dadurch gekennzeichnet, dass** die Wärmetauscher (5) in überlappenden Positionen angeordnet sind.

4. Wärmeanordnung nach Anspruch 1,
**dadurch gekennzeichnet, dass** die Wärmetauscher (5) in Seite-an-Seite befindlichen Positionen angeordnet sind.

5. Wärmeanordnung nach Anspruch 1,
**dadurch gekennzeichnet, dass** die Wärmetauscher (5) in überlappenden und Seite-an-Seite befindlichen Positionen angeordnet sind.

## Revendications

1. Ensemble thermique modulaire pour chaudière à condensation, comprenant une enceinte unique (1) avec un espace intérieur pour la circulation d'un fluide utile devant être chauffé, une pluralité d'échangeurs de chaleur (5) logés dans ledit espace intérieur pour la formation et la circulation d'un fluide d'échange de chaleur et un brûleur de modulation (10) avec un fonctionnement indépendant associé à chaque échangeur de chaleur (5), dans lequel chaque échangeur de chaleur (5) comprend une chambre de combustion (6) à laquelle ledit brûleur de modulation respectif (10) est associé pour la génération du fluide d'échange de chaleur, **caractérisé en ce que** chaque échangeur de chaleur (5) comprend de plus des parois fendues (7) pour le passage du fluide d'échange de chaleur et une chambre d'expulsion (8) pour la sortie du fluide d'échange de chaleur à travers une cheminée d'échappement (9) .

2. Ensemble thermique selon la revendication 1, **caractérisé en ce que** ledit brûleur de modulation (10) est fixé à une paroi de l'enceinte (1) au niveau d'une embouchure (11) communiquant avec ladite chambre de combustion (6).

3. Ensemble thermique selon la revendication 1, **caractérisé en ce que** lesdits échangeurs de chaleur (5) sont disposés dans des positions chevauchées.

4. Ensemble thermique selon la revendication 1, **caractérisé en ce que** lesdits échangeurs de chaleur (5) sont disposés dans des positions côte à côte.

5. Ensemble thermique selon la revendication 1, **caractérisé en ce que** lesdits échangeurs de chaleur (5) sont disposés dans des positions chevauchées et côte à côte.
